**Europäisches Patentamt**

(19) **European Patent Office**

**Office européen des brevets**

(11) Veröffentlichungsnummer: **0 333 701 B1**

# (12) EUROPÄISCHE PATENTSCHRIFT

(45) Veröffentlichungstag der Patentschrift:
11.09.91 Patentblatt 91/37

(51) Int. Cl.$^5$: **F02D 41/14, F02D 31/00**

(21) Anmeldenummer: **89890078.2**

(22) Anmeldetag: **16.03.89**

(54) **Verfahren zum Steuern und Regeln einer Brennkraftmaschine eines Fahrzeuges.**

(30) Priorität: **16.03.88 DE 3808819**

(43) Veröffentlichungstag der Anmeldung:
**20.09.89 Patentblatt 89/38**

(45) Bekanntmachung des Hinweises auf die Patenterteilung:
**11.09.91 Patentblatt 91/37**

(84) Benannte Vertragsstaaten:
**AT CH DE ES FR GB IT LI SE**

(56) Entgegenhaltungen:
**WO-A-87/02418**
**DE-A- 3 329 800**
**US-A- 4 163 282**

(73) Patentinhaber: **Automotive Diesel Gesellschaft m.b.H.**
**Derfflingerstrasse 15**
**A-4020 Linz (AT)**

(72) Erfinder: **Augesky, Christian, Dipl. Ing.**
**Innstrasse 25/18**
**A-1200 Wien (AT)**
Erfinder: **Heiss, Michael, Dipl.-Ing.**
**Weisenhorngasse 115**
**A-1235 Wien (AT)**
Erfinder: **Höfinger, Raimund**
**Jägerstrasse 26/20**
**A-1200 Wien (AT)**
Erfinder: **Bayer, Robert**
**Wehrgasse 11/22**
**A-1050 Wien (AT)**
Erfinder: **Forster, Felix**
**Laxenburgerstrasse 100**
**A-1100 Wien (AT)**

(74) Vertreter: **Matschnig, Franz, Dipl.-Ing.**
**Siebensterngasse 54**
**A-1070 Wien (AT)**

**Beschreibung**

Die Erfindung bezieht sich auf ein Verfahren zum Steuern und Regeln einer Brennkraftmaschine eines Fahrzeuges, bei welchem in Abhängigkeit von Betriebsgrößensignalen, wie der Drehzahl, der Fahrpedalstellung, der Motortemperatur etc. in einer Recheneinrichtung ein Ausgangssignal errechnet und dieses zur Steuerung eines elektromechanischen Stellgliedes für die Kraftstoff- und/oder Luftmenge, insbesondere für eine Einspritzpumpe oder Pumpedüsen eines Dieselmotors herangezogen wird, wobei die P-, I- und D-Anteile eines Drehzahlregelsignales getrennt ermittelt und sodann addiert werden und das erhaltene Summensignal nach allfälliger Korrektur und/oder Begrenzung dem Stellglied zugeführt wird, sowie auf eine Vorrichtung zur Durchführung dieses Verfahrens.

Elektronischen Reglern von Kraftfahrzeug-Brennkraftmaschinen, insbesondere von Dieselmotoren, wird neben anderen Größen als wichtigste Regelgröße die Motordrehzahl in Form eines Drehzahlsignals zugeführt. In Abhängigkeit von den zugeführten Größen wird, meist unter Berücksichtigung abgespeicherter Kennlinienfelder, ein Ausgangssignal berechnet, welches elektromechanisch auf ein Stellgleid, bei einem Dieselmotor, z.B. die Regelstange der Einspritzpumpe oder das Mengenstellglied von Pumpedüsen einwirkt.

Ein solcher Regler weist im allgemeinen bezüglich der Drehzahlregelung eine PID-Charakteristik mit einem Proportional-, Integral- und Differentialanteil (im folgenden nur kurz P-, I- und D-Anteil genannt) auf (z.B. DE-A-2735596), wobei die Einflüsse dieser Anteile auf das Verhalten einer Regelstrecke dem Fachmann bekannt sind und hier nicht im Detail erörtert werden müssen.

Es sei jedoch angeführt, daß der D-Anteil, welcher der Änderung der Drehzahl mit der Zeit, d.h. der Winkelbeschleunigung proportional ist, von besonderem Einfluß auf die Stabilität des dynamischen Systems Motor-Fahrzeug ist, wobei die bei der Regelung auftretenden Totzeiten leicht zu Instabilitäten, z.B. zu Ruckelschwingungen, führen (vgl.DE-A 2906782). Weiters sei erwähnt, daß hier unter der Berechnung des P-Anteils nicht bloß die einfache Multiplikation eines drehzahlabweichungsproportionalen Wertes mit einem konstanten Faktor zu verstehen ist, sondern daß der P-Anteil üblicherweise unter Zuhilfenahme zwei- oder mehrdimensionaler kennlinienfelder durch Interpolation berechnet wird — ein Vorgang, der verhältnismäßig lange Rechenzeiten erfordert. Das Abgehen von einem streng linearen D-Anteil bei gewissen Betriebsbedingungen ist z.B. aus der DE-A-3329800 bekannt geworden.

Bei Reglern nach dem Stand der Technik werden nach dem Einlesen der Meßwerte, insbesondere der Drehzahlwerte, der P-, I- und D-Anteil nacheinander berechnet und sodann, gegebenenfalls nach Korrektur und/oder Begrenzung dem Stellglied zugeführt. Der nächste Meßinterrupt mit dem Einlesen neuer Meßwerte kann sinnvollerweise erst nach Beendigung der Berechnung und Ausgabe des Summensignals durchgeführt werden. Die durch Eingabe der Meßwerte, Berechnung der P-, I- und D-Anteile, Summieren dieser Anteile und Ausgabe des Summensignals gegebene Totzeit führt dazu, daß rasche Änderungen der Meßdaten (Drehzahl) nicht schnell genug erfaßt werden, was einer wirksamen Regelung in gewissen Betriebssituationen, wie schnellen Lastwechselreaktionen etc. entgegensteht.

Die Erfindung hat es sich zum Ziel gesetzt, durch Verringerung der Totzeit zu kürzeren Meßintervallen zu gelange, wobei die Erkenntnis maßgebend ist, daß für eine Verbesserung der Stabilität des Systems in erster Linie eine rasche Berechnung des D-Anteils maßgeblich ist. Das angestrebte Ziel läßt sich mit einem Verfahren der eingangs genannten Art erreichen, welches die im Kennzeichen des Patentanspruches 1 genannten Merkmale besitzt.

Die konsequente Trennung der Berechnung des D-Anteils von der Berechnung der P- und I-Anteile, wobei die D-Anteil-Berechnung mit höherer Priorität erfolgt, führt zu einer merklich erhöhten Stabilität der Regelung.

Der verwendete Begriff "je zu Beginn des drehzahlsynchronen Meßintervalles" ist dahingehend zu verstehen, daß die Ermittlung der Drehzahlwerte möglichst bald nach Abschluß eines Meßinvervalls erfolgt, wobei der Abschluß eines Meßintervalles dem Beginn des nächsten Meßintervalles entspricht.

Weitere Merkmale der Erfindung sind in den Unteransprüchen gekennzeichnet.

Die Erfindung samt ihren weiteren Vorteilen ist im folgenden an Hand eines Beispiels unter Bezugnahme auf die Zeichnung näher erläutert. In dieser zeigen Fig. 1 in schematischer Darstellung eine Vorrichtung zur Durchführung des Verfahrens nach der Erfindung, Fig. 2 an Hand eines zeitlichen Ablaufdiagramms ein Verfahren nach dem Stand der Technik, Fig. 3 in einem ähnlichen, ausführlicheren Diagramm das Verfahren nach der Erfindung und Fig. 4 ein vereinfachtes Flußdiagramm zum Verfahren nach der Erfindung.

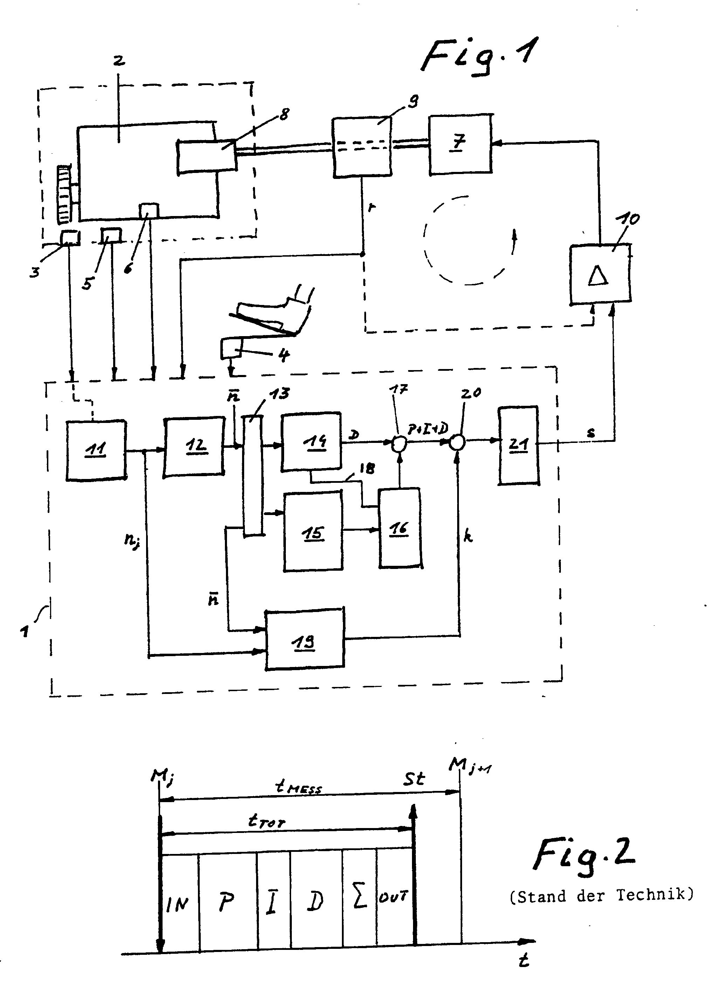

Gemäß Fig. 1 werden einer elektronischen Rechenschaltung 1 verschiedene Betriebsgrößen eines Motors 2, im vorliegenden Fall eines Dieselmotors, bzw. des zugehörigen Fahrzeuges zugeführt. Es handelt sich dabei in erster Linie um Signale eines Drehzahlgebers 3 und eines Gaspedalstellungssensors 4, weiters z.B. eines Motortemperatursensors 5, eines Ladedrucksensors 6 usw. Ein elektromechanisches Stellglied 7, beispielsweise ein auf das Mengenstellglied einer Verteilereinspritzpumpe 8 wirkender Stellmagnet, ist mechanisch mit einem Rückmelder 9 verbunden, dessen für die Stellung des Stellgliedes 7 repräsentatives Ausgangssignal r an die Rechenschaltung 1 zurückgeführt wird. Das Stellglied 7 wird über eine Treiberstufe 10 von dem Ausgangssignal s der Rechenschaltung 1 angesteuert. In bekannter Weise kann ein hier nicht gezeigter, nur strichliert angedeuteter Servokreis für die Stellgliedansteuerung vorgesehen sein (vgl. DE-Patentanmeldung P 3730443).

In der Rechenschaltung 1 wird das Signal des Drehzahlgebers 3 in einem Drehzahlmeßblock 11 zu einem Drehzahlsignal $n_j$ verarbeitet, das bevorzugt über je einen Verbrennungshub gemessen wird. In einer darauffolgenden Mittelungsstufe 12 erfolgt eine integrale Messung z.B. über einen Verbrennungszyklus, wobei bekannte rekursive oder transversale Verfahren Verwendung finden. Hiezu verwendbare Filteralgorithmen gehören dem Stand der Technik an (z.B. "Halbleiterschaltungstechnik", U. Tietze, Ch. Schenk, Springer Verlag, 6. Auflage 1983 oder "Digitale Regelsysteme", R. Isermann, Springer Verlag 1977). Die Messung muß nicht über einen vollständigen Verbrennungszyklus erfolgen, sondern soll über die Dauer eines Verbrennungszyklus durchgeführt werden, d.h. sie kann beispielsweise über die zweite Hälfte des Verbrennungszyklus eines ersten Zylinders und über die erste Hälfte des Verbrennungszyklus (Hubes) eines zweiten Zylinders erfolgen. Der Meßblock 11 kann in bekannter Weise Impulsformer, Frequenzteiler oder -vervielfacher enthalten, wobei auf die Art des Drehzahlgebers 3 und die Anzahl der pro Motorumdrehung anfallenden Impulse Rücksicht zu nehmen ist. Ebenso kann bei Ausfall des Drehzahlgebers 3 dem Meßblock 11 das Signal eines weiteren Drehzahlgebers, z.B. der Lichtmaschine des Fahrzeuges, zugeführt werden, wobei in diesem Zusammenhang auf die DE-A 35 01 435 verwiesen wird.

Das gemittelte Drehzahlsignal $\bar{n}$ kann in einem Speicher 13 abgelegt und kann einerseits einem Rechnerbereich 14 zur Berechnung des D-Anteils der Regelstrecke und andererseits einem Rechnerbereich 15 zur Berechnung der P- und I-Anteile zugeführt werden. Ein Speicher 16 kann die im Bereich 15 errechneten P- und I-Anteile getrennt oder als Summe vorübergehend aufnehmen. Ein erster Summenpunkt 17 dient zum Summieren des negativen D-Anteils D mit den P- und I-Anteilen, die nach einem über eine Steuerleitung 18 von dem Bereich 14 an den Speicher 16 gegebenen Befehl ausgelesen werden. Es ist weiters eine Korrektureinheit 19 vorgesehen, welcher die Drehzahlsignale $n_j$ und $\bar{n}$ zugeführt werden. In dieser Einheit wird aus verschiedenen Betriebsparametern ein Korrektursignal k errechnet, wobei gegebenenfalls auch eine auf einzelne Zylinder bezogene Nachregelung erfolgen kann, wofür auf jeden Fall das für einen einzigen Verbrennungshub maßgebliche Drehzahlsignal $n_j$ benötigt wird. Das Korrektursignal k wird mit dem P + I + D-Signal in einem zweiten Summenpunkt 20 vereinigt und einer Begrenzereinheit 21 zugeführt, die vor allem aus Sicherheitsgründen (Vollastbegrenzung) und zur Einhaltung vorgegebener Abgaswerte vorgesehen ist. Ihr Ausgangssignal s wird zur Treiberstufe 10 geführt.

Bevor auf den genaueren Funktionsablauf eingegangen wird, soll an Hand der Fig. 2 die Ermittlung des Regelsignales nach dem Stand der Technik erläutert werden. Zu einem bestimmten Zeitpunkt wird, mit dem Pfeil Mj angedeutet, ein Meßinterrupt durchgeführt, der gemessene Drehzahlwert wird eingelesen ("IN"), daraufhin werden der P-, der I- und der D-Anteil errechnet, summiert und zur Ansteuerung des Stellgliedes ausgegeben (Pfeil St). Die gesamte Zeit zwischen Eingabe des Meßwertes und Ausgabe des errechneten Wertes wird mit $t_{TOT}$ bezeichnet, sie bestimmt tatsächlich die Totzeit der Regelstrecke und bestimmt die Zeit $t_{MESS}$ zwischen aufeinanderfolgenden Messungen, wobei sinnvollerweise $t_{MESS} > t_{TOT}$ gelten sollte. Wird die Meßzeit kleiner als die Totzeit, so sind einzelne Messungen sinnlos und die Rechenschaltung greift oft auf "veraltete" Meßwerte zurück.

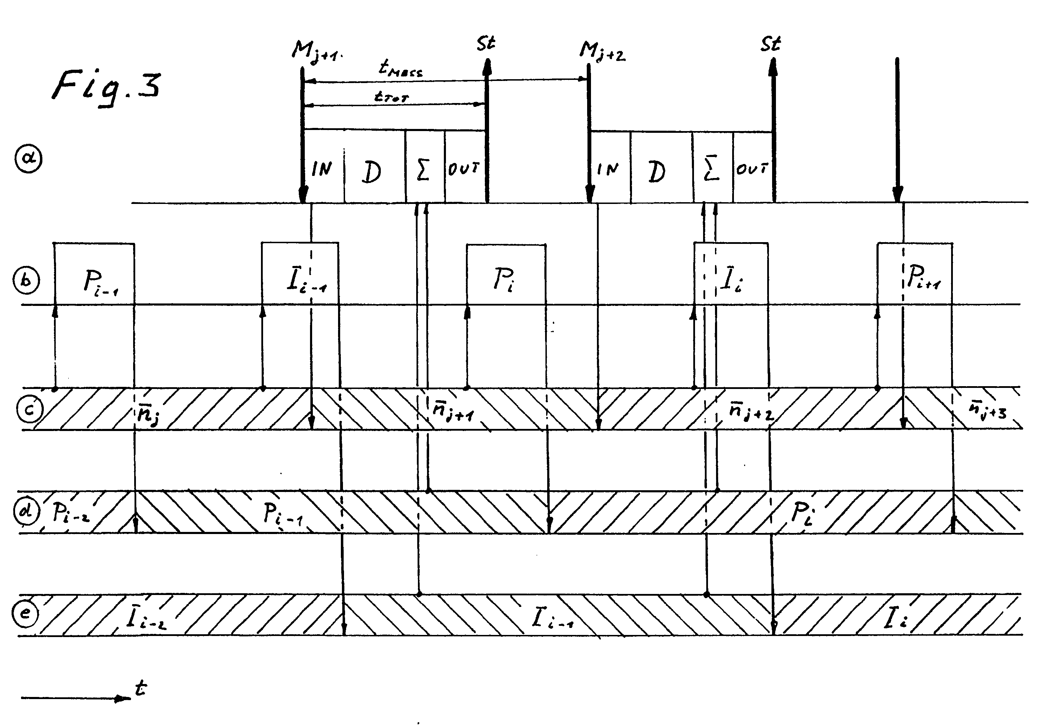

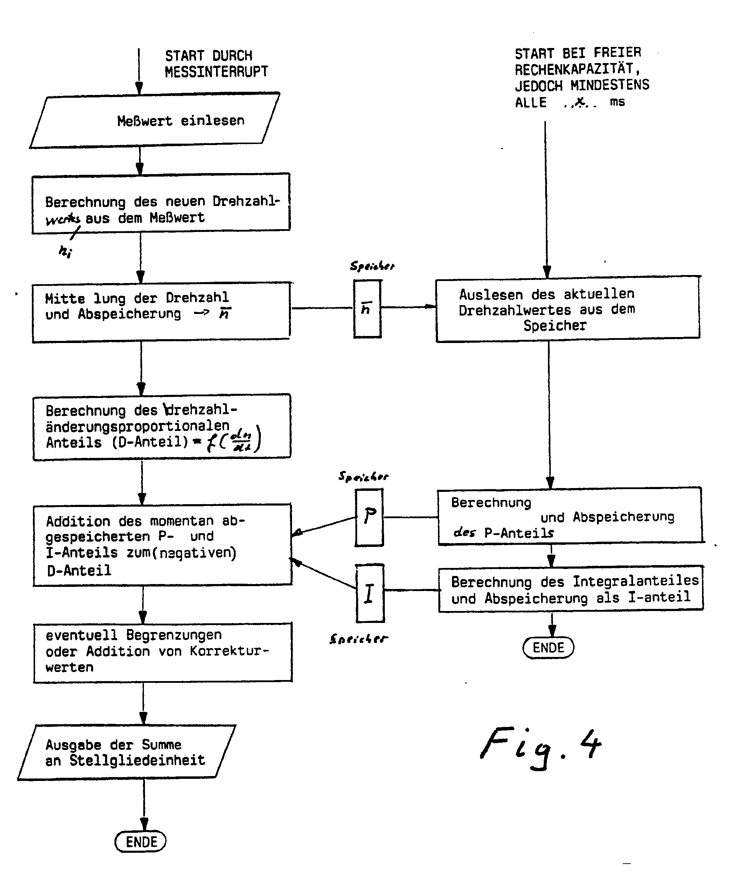

Wie bereits eingangs erwähnt, sieht die Erfindung ein Verfahren vor, bei dem die Ermittlung des D-Anteils mit höherer Priorität, getrennt von der Ermittlung der P- und I-Anteile erfolgt. Zur Erläuterung dieses Verfahrens wird nachstehend nicht nur auf Fig. 1 sondern auch auf Fig. 3 und 4 Bezug genommen.

Zu einem bestimmten Zeitpunkt wird ein Meßinterrupt durchgeführt (Pfeil $M_{j+1}$ in Fig. 3a) Der Meßwert $\bar{n}_{j+1}$ wird eingelesen und in einem Speicher abgelegt, wo er den bisherigen Wert $\bar{n}_j$ ersetzt (Fig. 3c und Speicher 13 in Fig. 1). Es folgt (Fig. 3a) die Berechnung des D-Anteils. Sobald diese beendet ist, werden zuvor berechnete und in Speichern (vgl. Speicher 16, Fig. 1) vorhandene P-Anteile $P_{i-1}$ (Fig. 3d) bzw. I-Anteile $I_{i-1}$ (Fig. 3e) abgerufen (siehe Steuerleitung 18 der Fig. 1) und zu dem errechneten D-Anteil addiert. Das Summensignal wird zur Ansteuerung des Stellgliedes ausgegeben (Pfeil St ; Fig. 3a).

In Fig. 3b ist schematisch mit den Kästchen $P_i$, $I_i$ die Berechnung der P- und I-Anteile angedeutet. Diese Berechnung erfolgt ohne zeitliche Kopplung an die D-Anteilsberechnung entweder dann, wenn Rechenkapazität frei ist, oder in bestimmten, vorgegebenen Zeitintervallen, z.B. alle 20 ms. Hiezu werden die Drehzahlwerte $\bar{n}$ aus dem zugehörigen Speicher (Speicher 13 in Fig. 1 ; Fig. 3c) abgerufen. Die errechneten P- und I-Anteile werden vorübergehend abgelegt (Fig. 3d, e ; Speicher 16 in Fig. 1), sodaß sie zum gegebenen Zeitpunkt zur Summierung mit dem D-Anteil bereitstehen.

Man erkennt aus Fig. 3 deutlich, daß die Berechnung des D-Anteils an die Meßintervalle $t_{MESS}$ gebunden ist, was erst durch die davon getrennte, zeitaufwendige Berechnung der P- und I-Anteile möglich ist. Die Meßzeit $t_{MESS}$ ist innerhalb zumindest von Drehzahlbereichen der Motordrehzahl verkehrt proportional. Dies bedeutet, daß man z.B. ab einer gewissen Drehzahl nur jeden zweiten Impuls und bei noch höheren Drehzahlen bloß jeden dritten oder vierten Impuls des Drehzahlgebers zur Berechnung verwenden kann etc. In Fig. 3 beziehen sich die Indices j auf aufeinanderfolgende Meßintervalle, wogegen die Indices i auf die wiederkehrenden P- und I-Anteilsberechnungen bezug nehmen. Das Schema nach Fig. 3 sieht die getrennte Abspeicherung der errechneten P- und I-Anteile vor. Es ist jedoch ebensogut möglich, die Summe P + I abzuspeichern und sodann zu dem D-Anteil hinzu zu addieren.

Nach der Erfindung werden somit stets "aktuelle" Drehzahlwerte $\bar{n}$ zur Berechnung des besonders wesentlichen D-Anteils herangezogen, wogegen die verwendeten P- und I-Anteile bei kürzeren Meßintervallen auch "veraltet" sein können. Wegen der Verringerung der Totzeit kann somit auch die Meßzeit entsprechend verringert werden, was zu einer Verbesserung des Regelverhaltens führt.

Fig. 4 veranschaulicht in übersichtlicher Weise den Ablauf des oben beschriebenen Verfahrens zur Ermittlung des Stellgliedsignales, wobei sich eine zusätzliche Erläuterung erübrigt.

## Patentansprüche

1. Verfahren zum Steuern und Regeln einer Brennkraftmaschine eines Fahrzeuges, bei welchem in Abhängigkeit von Betriebsgrößensignalen, wie der Drehzahl, der Fahrpedalstellung, der Motortemperatur etc. in einer Recheneinrichtung ein Ausgangssignal errechnet und dieses zur Steuerung eines elektromechanischen Stellgliedes für die Kraftstoffund/oder Luftmenge, insbesondere für eine Einspritzpumpe oder Pumpedüsen eines Dieselmotors herangezogen wird, wobei die P-, I- und D-Anteile eines Drehzahlregelsignales getrennt ermittelt und sodann addiert werden und das erhaltene Summensignal nach allfälliger Korrektur und/oder Begrenzung dem Stellglied zugeführt wird, dadurch gekennzeichnet, daß Drehzahlwerte je zu Beginn des drehzahlsynchronen Meßintervalles ermittelt, in einem Drehzahlspeicher abgelegt und zur Berechnung des D-Anteils herangezogen werden, daß unabhängig von den Meßintervallen, z.B. zu festen Taktzeiten oder nach Verfügbarkeit der Recheneinrichtung die jeweiligen Drehzahlwerte aus dem Drehzahlspeicher abgerufen und zur darauffolgenden Ermittlung des P- und/oder I-Anteiles herangezogen werden, die ermittelten P- und I-Anteile bzw. deren Summe in P- und I-Speichern bzw. in einem PI-Summenspeicher abgelegt werden und daß nach Abschluß der Berechnung des D-Anteils dieser mit den abgespeicherten P- und I-Anteilen bzw. deren Summe summiert und das Summensignal ausgegeben wird.

2. Verfahren nach Anspruch 1, dadurch gekennzeichnet, daß bei Ermittlung der Drehzahlwerte in an sich bekannter Weise eine integrale Messung je über eine Verbrennungszyklusdauer erfolgt.

3. Verfahren nach Anspruch 1 oder 2, dadurch gekennzeichnet, daß zur Vervielfachung der Dauer der Meßintervalle ab bestimmten Drehzahlen nur noch jeder zweite, dritte etc. Impuls eines Drehzahlgebers die Meßintervalle auslöst.

4. Einrichtung zur Durchführung des Verfahrens nach einem der Ansprüche 1 bis 3 mit einer Rechenschaltung (1) zur Steuerung und Regelung der Brennkraftmaschine eines Kraftfahrzeuges, mit Gebern und Sensoren (3, 4, 5) zur Erfassung von Betriebsgrößen des Motors (2) bzw. des Fahrzeuges, wie z.B. der Drehzahl, der Gaspedalstellung, der Motortemperatur etc., deren Signale der Rechenschaltung (1) zugeführt sind, wobei ein Ausgangssignal (s) der Rechenschaltung zum Antrieb eines elektromechanischen Stellgliedes (7) für die dem Motor zugeführte Kraftstoff- und/oder Luftmenge herangezogen ist und für die Regelung nach der Drehzahl eine PID-Regelung vorgesehen ist, wobei ein Drehzahlmeßblock (11, 12) zur Ermittlung mittlerer Drehzahlwerte $(\bar{n})$ vorgesehen ist, dadurch gekennzeichnet, daß ein Drehzahlspeicher (13) zur vorübergehenden Ablage der mittleren Drehzahlwerte $(\bar{n}_j)$, ein Rechnerbereich (14) zur Berechnung des D-Anteils nach Einlesen des jeweiligen Drehzahlwertes zu Beginn aufeinanderfolgender, der Drehzahl umgekehrt proportionaler Meßintervalle $(t_{MESS})$, ein Rechnerbereich (15) zur Berechnung der P- und I-Anteile nach Einlesen des jeweiligen mittleren Drehzahlwertes $(\bar{n})$ aus dem Drehzahlspeicher (13) zu von den Meßintervallen unabhängigen Zeitpunkten, ein Speicher (16) zur vorübergehenden Ablage der im Rechnerbereich (15) ermittelten P- und I-Anteile und ein Summenpunkt (17) vorgesehen sind, der zur Vereinigung des D-Anteils unmittelbar nach dessen Berechnung mit den im Speicher (16) vorhandenen P- und I-Anteilen vorgesehen ist.

5. Einrichtung nach Anspruch 4, mit einem Rechnerbereich (15) zur Berechnung der P- und I-Anteile, dadurch gekennzeichnet, daß Speicher für zwei- oder mehrdimensionale Kennlinienfelder vorgesehen sind, die zur Berechnung des P-Anteiles herangezogen werden.

## Claims

1. A process to control and regulate a motor vehicle internal combustion engine in which, depending on operating value signals, such as engine speed, accelerator pedal position, engine temperature etc. an output signal is generated in a processing device and this is applied to the control of an electromechanical servo device for controlling quantities of fuel and/or air, in particular for an injection pump or pump injectors of a diesel engine in which the P- I- and D-parts of an engine speed regulating signal are detected separately and then summated and the received summated signal will be passed to the servo device after any necessary correction and/or limitation, characterised in that engine speed values are detected at the beginning of the engine speed synchronous measuring interval, stored in an engine speed store and called up to calculate the D- part, and that independently of the measuring intervals, eg : at fixed clock times or in accordance with availability of the processing device the specific engine speed values are called up from the engine speed store and then determine the P- and/or I- parts, the returned P- and I- parts and their sum is stored in the P-and I- stores or in a P-I- totalling store and that on completion of calculation of the D- part the latter is added to the stored P- and I- parts or their sum and the summated signal is outputted.

2. Process as in Claim 1, characterised in that on detection of the engine speed values in a known way an integral measurement results across each combustion cycle period.

3. Process as in Claim 1 or 2, characterised in that to multiply the duration of the measuring intervals from certain engine speeds upwards only every second, third etc. pulse of an engine speed sensor triggers the measuring interval.

4. Device to carry out the process in accordance with one of the Claims 1 to 3 with a processing circuit (1) to control and regulate the internal combustion engine of a motor vehicle, with detectors and sensors (3, 4, 5) to obtain operating values of the engine (2) or vehicle, such as engine speed, accelerator pedal position, engine temperature etc., the signals from which are fed to the processing circuit (1) wherein an output signal (s) of the processing circuit is used to drive an electromagnetic servo device (7) for the quantity of fuel and/or air which is fed to the engine and for regulating a PID regulator in accordance with the engine speed, wherein an engine speed measuring block (11, 12) is provided to determine average engine speed values ($\bar{n}$) characterised in that there is an engine speed store (13) for temporary storage of average engine speed values ($\bar{n}j$), a processor facility (14) for calculating the D- part after reading in the specific engine speed value at the beginning of successive measuring intervals ($t_{MESS}$) which are inversely proportional to engine speed, a processing facility (15) to calculate the P- and I- parts after reading in the appropriate average engine speed value ($\bar{n}$) from the engine speed store (13) at times which are independent of the measuring intervals, a store (16) for temporary storage of the P- and I- parts determined in processing facility (15) and a summation point (17) which is provided for combining, immediately after its calculation, the D- part with the P- and I- parts which are available in store (16).

5. Device as in Claim 4 with a processing facility (15) to calculate the P- and I- parts, characterised in that memories for two dimensional or multi-dimensional characteristics are provided which are used to calculate the P- part.

**Revendications**

1. Procédé de commande et de régulation d'un moteur à combustion interne d'un véhicule, selon lequel un signal de sortie est calculé dans un dispositif de calcul en fonction de signaux de grandeurs de fonctionnement tels que la vitesse de rotation, la position de la pédale d'accélérateur, la température du moteur, etc, et ce signal est utilisé pour la commande d'un organe électromécanique de réglage de la quantité de carburant et/ou la quantité d'air, notamment pour une pompe d'injection ou des gicleurs de pompe d'un moteur diesel, et selon lequel les composantes P, I et D d'un signal de régulation de la vitesse de rotation sont déterminées séparément et sont ensuite additionnées et le signal somme obtenu est envoyé à l'organe de réglage, après une éventuelle correction et/ou limitation, caractérisé en ce que les valeurs de la vitesse de rotation sont déterminées respectivement au début de l'intervalle de mesure, synchronisé sur la vitesse de rotation, sont mémorisées dans une mémoire de la vitesse de rotation et sont utilisées pour le calcul de la composante D, qu'indépendamment des intervalles de mesure, c'est-à-dire à des instants fixes de cadence ou en fonction de la disponibilité du dispositif de calcul, les valeurs respectives de la vitesse de rotation sont appelées à partir de la mémoire de la vitesse de rotation et sont utilisées pour déterminer ensuite la composante P et/ou I, que les composantes P et I déterminées ou leur somme sont mémorisées dans des mémoires de P et de I ou dans une mémoire de la somme PI, et qu'à la fin du calcul de la composante D, cette dernière est ajoutée aux composantes P et I mémorisées ou à leur somme et que le signal somme est délivré.

2. Procédé selon la revendication 1, caractérisé en ce que, lors de la détermination des valeurs de la vitesse de rotation, on réalise de façon connue en soi une mesure intégrale respectivement en fonction d'une durée du cycle de combustion.

3. Procédé selon la revendication 1 ou 2, caractérisé en ce que pour la multiplication de la durée des intervalles de mesure, seule encore chaque seconde, troisième, etc. impulsion d'un générateur de la vitesse de rotation déclenche les intervalles de mesure, à partir de vitesses de rotation déterminées.

4. Dispositif pour la mise en oeuvre du procédé selon l'une des revendications 1 à 3, comportant un circuit de calcul (1) pour la commande et la régulation du moteur à combustion interne d'un véhicule automobile, des transmetteurs et des capteurs (3, 4, 5) servant à détecter des grandeurs de fonctionnement du moteur (2) ou du véhicule, comme par exemple la vitesse de rotation, la position de la pédale d'accélération, la température du moteur, etc., dont les signaux sont envoyés au circuit de calcul (1), et dans lequel un signal de sortie (s) du circuit de calcul est utilisé pour l'activation d'un organe électromécanique (7) de réglage de la quantité de carburant et/ou de la quantité d'air envoyé au moteur, et qu'il est prévu, en fonction de la vitesse de rotation, un système de régulation PID (à action proportionnelle, intégrale et différentielle), un bloc (11, 12) de mesure de la vitesse de rotation étant prévu pour la détermination de valeurs moyennes ($\bar{n}$) de la vitesse de rotation, caractérisé en ce qu'il est prévu une mémoire (13) de la vitesse de rotation, servant à mémoriser de façon transitoire des valeurs moyennes ($\bar{n}j$) de la vitesse de rotation, une zone (14) du calculateur pour calculer la composante D après la lecture de la valeur respective de la vitesse de rotation au début d'intervalles successifs de mesure ($t_{MESURE}$) inversement proportionnels à la vitesse de rotation, une zone (15) du calculateur pour le calcul des composantes P et I après la lecture de la vitesse moyenne respective ($\bar{n}$) de la vitesse de rotation à partir de la mémoire (13) de la vitesse de rotation, à des instants, qui sont indépendants des intervalles de mesure, une mémoire (16) servant à mémoriser de façon transitoire les composantes P et I déterminées dans la zone (15) du calculateur, et un noeud de sommation (17), qui sert à réunir la composante D, juste après son calcul, aux composantes P et I présentes dans la mémoire (16).

5. Dispositif selon la revendication 4 comportant une zone (15) du calculateur pour le calcul des composantes P et I, caractérisé en ce qu'il est prévu des mémoires pour des ensembles bidimensionnels ou multidimensionnels de courbes caractéristiques, qui sont utilisés pour le calcul de la composante P.

*Fig.1*

*Fig.2*

(Stand der Technik)

Fig. 3

$M_{j+1}$   $t_{Mess}$   St   $M_{j+2}$   St

$t_{TOT}$

(a)   IN   D   $\Sigma$   OUT   IN   D   $\Sigma$   OUT

(b)   $P_{i-1}$   $I_{i-1}$   $P_i$   $I_i$   $P_{i+1}$

(c)   $\bar{n}_j$   $\bar{n}_{j+1}$   $\bar{n}_{j+2}$   $\bar{n}_{j+3}$

(d)   $P_{i-2}$   $P_{i-1}$   $P_i$

(e)   $I_{i-2}$   $I_{i-1}$   $I_i$

$t$

EP 0 333 701 B1

START DURCH
MESSINTERRUPT

START BEI FREIER
RECHENKAPAZITÄT,
JEDOCH MINDESTENS
ALLE  ..x.. ms

Meßwert einlesen

Berechnung des neuen Drehzahl-
*werts* aus dem Meßwert

$n_i$

*Speicher*

Mitte lung der Drehzahl
und Abspeicherung $\rightarrow \bar{n}$

$\bar{n}$

Auslesen des aktuellen
Drehzahlwertes aus dem
Speicher

Berechnung des Drehzahländerungsproportionalen
Anteils (D-Anteil) $= f\left(\frac{dn}{dt}\right)$

*Speicher*

$P$

Berechnung                und Abspeicherung
*des* P-Anteils

Addition des momentan abgespeicherten P-  und
I-Anteils zum(negativen)
D-Anteil

$I$

Berechnung des Integralanteiles
und Abspeicherung als I-anteil

*Speicher*

ENDE

eventuell Begrenzungen
oder Addition von Korrekturwerten

Ausgabe der Summe
an Stellgliedeinheit

# Fig. 4

ENDE